**Europäisches Patentamt**

**European Patent Office**

**Office européen des brevets**

(11) Publication number: **0 180 307**
A1

# EUROPEAN PATENT APPLICATION

(21) Application number: 85306265.1

(22) Date of filing: 04.09.85

(51) Int. Cl.⁴: **B 60 B  37/10,** B 60 B  19/00

(30) Priority: 04.09.84  AU 6930/84

(71) Applicant: **NYLEX CORPORATION LIMITED, 10 Queens Road, Melbourne VIC 3004 (AU)**

(43) Date of publication of application: **07.05.86 Bulletin 86/19**

(72) Inventor: **Burling, Berkley Standwick, Alexander Road, Warrandyte Victoria (AU)**

(74) Representative: **Marsh, Roy David et al, Brewer & Son 5-9, Quality Court Chancery Lane, London WC2A 1HT (GB)**

(84) Designated Contracting States: **CH DE FR GB IT LI**

(54)  **Improved wheel and wheel/axle assembly.**

(57)  A wheel structure 10 is disclosed, including a rim 12 and a hub 14 located centrally with respect to the rim; the hub having an axially extending stub member 20 thereon engegeable in axially overlapping relationship with an end portion of an axle 24 for the wheel; the stub member having detent means 34, 40 engageable with the axle to provide releasable engagement between the wheel and axle; the detent means being resiliently engageable with the axle.

ACTORUM AG

- 1 -    0180307

IMPROVED WHEEL AND WHEEL/AXLE ASSEMBLY

This invention relates to an improved wheel and to an improved wheel/axle assembly.

A wheel structure including a rim and a hub located centrally with respect to the rim; the hub having an axially extending stub member thereon engageable in axially overlapping relationship with an end portion of an axle for the wheel; the stub member having detent means engageable with the axles to provide releasable engagement between the wheel and axle; the detent means being resiliently engageable with the axle.

The stub member may define an axial bore in which the end portion of an axle is receivable. Alternatively, the stub portion may be receivable in an end portion of the axle.

The detent means may comprise a collet member engageable with a formation defined by the axle when the stub member and axle are axially engaged. The or each collet member may be integral with the stub portion and, in such case, it may extend axially within an opening of a wall defining the stub member. The or each collet member may have a laterally extending projection releasably engageable in a recess formed in the axle or, alternatively, it may have a recess in which a lateral projection on the axle is releasably engageable.

In one suitable form of the wheel, the stub member is defined by a cylindrical wall with there being at least two circumferentially spaced openings in the wall and a respective collet member in each opening. Each collet member preferably extends axially within its opening and at one of its ends it is connected to the cylindrical wall. The openings may be located intermediate the ends of the stub member.

The stub member may be cylindrical. Particularly in that case, the detent means may be of arcuate cross-section in a plane perpendicular to the axial extent of the stub member. Such cross-section preferably enables the detent means to be engageable with at least a portion of the circumference of the axle. Thus, in the above-described form of the wheel, the collet members comprising the detent means may be of elongate form axially of the stub member and of arcuate form transversely of their length so as to define a face which is substantially concentric with surfaces of the cylindrical wall and by which the collet member is engageable with the axle.

The detent means may be resiliently engageable with the axle by being resiliently deformable or bendable from a normal position as the stub portion and axle are engaged, and returnable to that position on full engagement of that portion and the axle to locate a shoulder of the detent means against a laterally extending shoulder of the axle. Where the detent means has a lateral projection, a shoulder defined by that projection and facing towards the wheel hub may thereby be locatable against a laterally extending shoulder of the axle which faces away from the hub. Alternatively, where the detent means defines a recess in which a lateral projection of the axle locates, the recess the projection each may have a lateral shoulder which, respectively, faces away from and towards the hub.

The wheel may include locking means for preventing unintended separation of the wheel and axle. Preferably the locking means is operable to prevent resilient deformation or bending of the detent means once the latter is acting to provide engagement between the wheel and axle. The locking means may comprise a sleeve movable axially of the stub member so as to contact the detent means and thereby restrain the latter against resilient deformation or bending. Alternatively, the locking member may comprise a clip positionable around the circumference of the stub member so as to contact and similarly restrain the detent means.

In one convenient form, the locking means is locatable at an axial length of the stub member which is of reduced wall thickness. That length of reduced wall thickness preferably is provided by a circumferential groove formed in the outer surface of the stub member. Where the locking member is a sleeve, it may be received axially onto the stub member and either heat contracted, or allowed to resiliently recover after being expanded, so as to locate in that groove. Where the locking member is a clip, it may be of penannular C-clip form and simply forced laterally of the stub member to locate in the groove.

The invention also provides an axle suitable for use with such wheel. The axle may be of elongate form and, at least one end portion thereof has engagement means enabling the wheel to be releasably engaged with the axle. The axle may be of rod or tubular form, with the or a peripheral surface thereof, preferably the outer such surface in the case of an axle of tubular form, having engagement means comprising a bead or groove extending therearound so as to be engageable with the detent means of the wheel.

In one convenient form, the axle is of metal tubing such as aluminium tubing. The engagement means of the or each end thereof may be an annular groove formed, such as by a rolling operation, in the outer surface thereof.

The invention also provides an assembly comprising such axle in combination with at least one wheel according to the invention.

Reference now is made to the accompanying drawings, in which:

Figure 1 is a perspective view of a wheel,

Figure 2 is a part sectional view on line II-II of Figure 1, showing the wheel in assembly with an axle, and

Figure 3 shows a modified arrangement.

The wheel 10 has a rim 12 and a central hub 14, with these being joined by an annular wheel plate 16 and strengthening ribs 18 on the latter. Providing an axial extension of hub 14, wheel 10 also has a cylindrical stub member 20 defining a bore 22 into which an end portion of an axle 24 is receivable, as shown in Figure 2.

Wheel 10 also may have a tyre 26. The latter may be separable from rim 12 or formed on the latter so as not to be separable. Peripheral beads 28 around rim 12 may serve to retain tyre 26, at least against unintended removal.

Intermediate its ends, stub member 20 has an axial length thereof provided in its outer surface with an annular groove 30. Within the reduced wall thickness resulting from groove 30, member 20 has an opposed pair of openings 32 in each of which there is provided a collet member 34. Each member 34 is integral with member 20 and extends toward hub 14 from the axially remote end of its opening 32. The inner and outer surface 36,38 of each member 34 is arcuate in cross-section so as to be substantially parallel to the corresponding surfaces of stub member 20.

On its inner surface 36, at or adjacent the end thereof nearer hub 14, each collet member 34 has a bead 40 extending circumferentially with respect to stub member 20. As shown in Figure 2, beads 40 locate in annular groove 42 formed in axle 24; the axle thus being retained in assembly with wheel 10 by side wall 44 of groove 42 defining a shoulder which is abutted by an opposed shoulder defined by each bead 40. Groove 42 can be formed by rolling, particularly where axle 24 is tubular as shown and of a metal such as steel or aluminium. Alternatively, groove 24 can be machined.

Wheel 10 preferably is of integral construction and formed, for example by injection moulding, from a plastics material such as polypropylene. Its tyre 26 may be of a plastics material, such as a synthetic rubber. A thermoplastic rubber, such as that available under the trade mark SANTOPRENE, is particularly suitable for tyre 26, although a cross-linkable rubber also can be used.

Collet member 34 are able to resiliently flex to enable their beads 40 to retract clear of bore 22. This is necessary to enable insertion of the end portion of axle 24 into bore 22, and thereafter to enable return of beads 40 to the positions shown for their location in groove 42. The position shown for beads 40, which may be their normal position as formed, also can necessitate the ability of members 34 to flex in order to enable a mould core for forming bore 22 to be withdrawn. To give rise to flexing for this purpose, mould parts to form the outer surface of stub member 20 may be adapted to engage the ends of members 34 and, on separation of those mould parts, to draw those ends outwardly a distance sufficient to permit unimpeded withdrawal of the mould core.

Wheel 10 also includes a locking means. As shown in Figure 2, this comprises a sleeve 46 of a diameter such that it is received within groove 30 so as to engage surface 38 of each collet member 34 and constrain the latter against outward flexing; thereby retaining beads 40 within groove 42. Sleeve 46 is of a resilient material such that it is able to expand when being received onto stub member 20, and thereafter contract into groove 30. The end of member 20 remote from hub 14 is tapered as shown at 48 to facilitate sleeve 46 being received thereon.

Sleeve 46, in addition to providing a locking action, serves to preclude dirt or dust from entering between bore 22 and axle 24. It may be formed of a suitable plastics material, such as polypropylene, and can give the appearance of surface continuity along member 20, across groove 30.

While there are two apertures 32 and collet member 34 shown, this member can vary. In the illustrated arrangement, the members 34 each may have a lateral extent of from 30° to 50°, although this also can vary.

Wheel 10 can be rotatable relative to axle 24. Alternative, with axle 24 free to rotate, wheel 10 can rotate with it. In the latter case, it would be preferable for the end portion of axle 24 to have a friction fit in bore 22 and/or for frictional engagement of beads 40 in groove 42, under the action of sleeve 46, to be sufficient to prevent rotation of wheel 10 relative to axle 24 under the range of load condition applicable to a device to which the wheel/axle assembly is fitted.

The wheel/axle assembly is suited to various applications, such as for use with two or four wheeled trolleys, refuse bins and the like.

It will be appreciated that the arrangement described can be varied. In that arrangement, collet members 34 as formed extend substantially parallel to the wheel axis. This is preferred for ease of manufacture, particularly if wheel 10 is to be rotatable relative to axle 24. However, as formed, members· 34 can be inclined inwardly of bore 22 and, on insertion of axle 24, resiliently deformed by axle 24; to the position shown; the resilience of members 34 the adding to the action of sleeve 46 in retaining beads 40 in groove 42.

In a further variant, the shoulders defined by beads 40 need not be inset from the end of collet members 34. That is, each shoulder can be defined by a continuation of the end face of its member 34, due to the respective bead being at the end of its member 34.

In a further variant, a converse arrangement to beds 40 and groove 42 can be used. That is, each collet member 34 may define a groove instead of the bead 40; axle 24 having a raised peripheral bead instead of groove 42, with that bead received in the grooves of collet members 34.

Additionally, while stub member 20 and axle 24 are shown as being of circular cross-section; with wheel 10 preferably rotatable relative to axle 24, other arrangements can be used. Thus, axle 24 and at least bore 22 of member 20 can be of other cross-section, such as of square cross-section, with wheel 10 then rotatable with axle 24.

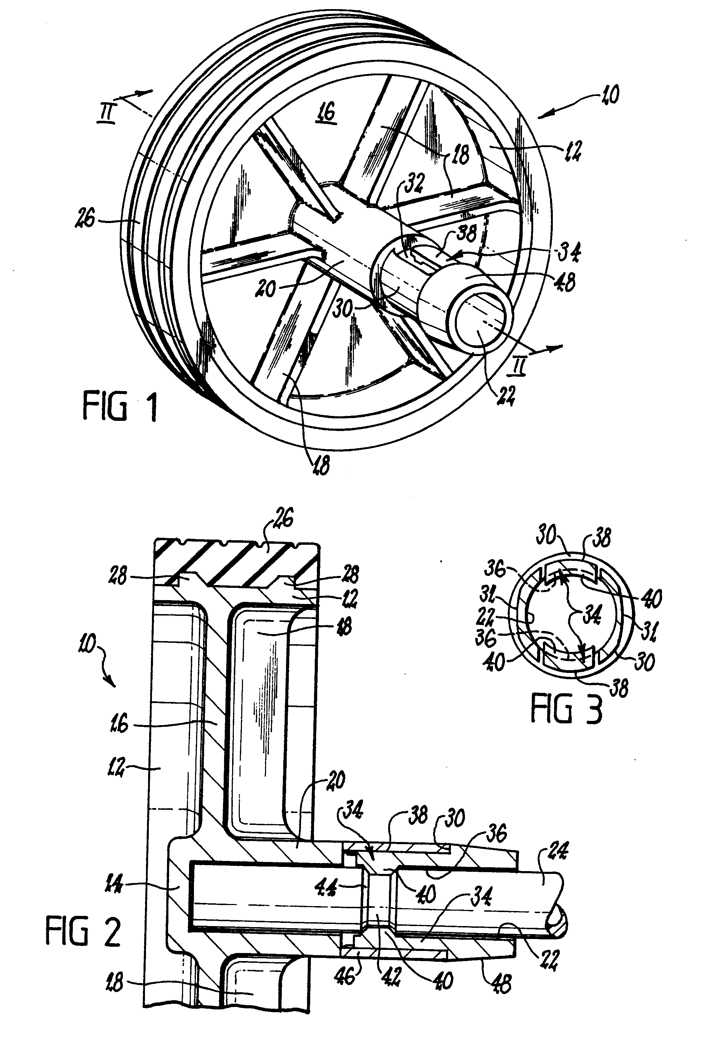

Figure 3 shows a sectional view of a modified stub member 20. The wheel of which the stub member 20 forms a part may be as shown in Figure 1 and 2, except as described below; the view of Figure 3 corresponding to a sectional view, intermediate the ends of groove 30 and looking away from the wheel hub and rim.

As shown in Figure 3, member 20 has diametrically opposed openings 32 in each of which is located a collet member 34. In these regards, the arrangement is as for Figures 1 and 2. However, at 90° to members 34, stub member 20 has formed on its outer surface, within the axial extent of groove 30, an opposed pair of flats 31. The provision of flats 31 which may extend axially over a major portion, or the full length, of groove 30 enable stub member to ovalate an assembly when the axle is inserted into bore 22. Such ovalation forces collet members 34 apart, prior to them recovering to locate beads 40 in axle groove 42, thereby facilitating assembly of the wheel and axle.

While the wheel of the invention can be rotatable with or relative to, the axle on which it is mounted, it is preferred that the wheel be rotatable relative to the axle, with the axle fixed against rotation in use. The axle preferably is extruded from high tensile aluminium. Its ends preferably are chamfered to give a lead in to the stub member of the wheel. The groove formed in the axle can be provided by various engineering processes, such as turning, spinning, crimping or rolling; the surface of the groove thereby being work hardened, to increase stability and toughness.

CLAIMS

1.      A wheel structure including a rim and a hub located centrally with respect to the rim; the hub having an axially extending stub member thereon engageable in axially overlapping relationship with an end portion of an axle for the wheel; the stub member having detent means engageable with the axle to provide releasable engagement between the wheel and axle; the detent means being resiliently engageable with the axle.

2.      A wheel structure according to claim 1 wherein the detent means includes at least one collet member engageable with a formation defined by the axle when the stub member and axle are axially engaged; the or each collet member being integral with the stub portion and extending axially within an opening of a wall defining the stub member.

3.      A wheel structure according to claim 2 wherein the stub member includes a cylindrical wall, at least two circumferentially spaced openings therewithin and a respective collet member in each opening, each collet member extending axially within its opening and being connected at one of its ends to the cylindrical wall.

4.      A wheel structure according to claim 3 wherein each collet member is of elongate form axially of the stub member and of arcuate form transversely of its length so as to define a face which is substantially concentric with surfaces of the cylindrical wall and by which the collet member is engageable with the axle.

5.      A wheel structure according to claim 4 further including locking means operable to prevent resilient deformation or bending of the detent means once the latter is acting to provide engagement between the wheel and axle.

6.      A wheel structure according to claim 5 wherein the stub member includes an axial length thereof of reduced wall thickness; said locking means being locatable therewithin.

7.      A wheel structure according to claim 6 wherein the or each collet member has a laterally extending projection releasably engageable in a recess formed in the axle; the lateral projection defining a shoulder facing towards the wheel hub and locatable against a laterally extending shoulder of the axle facing away from the hub.

8.    A wheel structure according to claim 6 wherein the or each collet member includes a recess in which a lateral projection on the axle is releasably engageable; the recess and projection each having a lateral shoulder which, respectively, faces away from and towards the hub.

9.    An assembly comprising at least one wheel structure according to claim 1 in combination with an axle of elongate form, at least one end portion thereof of the axle having engagement means enabling the wheel to be releasably engaged with the axle; the or a peripheral surface of the axle having engagement means comprising a bead or groove extending therearound so as to be engageable with the detent means of the wheel.

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 005 855   (BULLENS CAROLUS HENDRIKUS WILLIBRORDUS ET BULLENS JOHANNES HENDRIKUS) * Figures 1,2 * | 1,9 | B 60 B   37/10 B 60 B   19/00 |
| A | | 7,8 | |
| | --- | | |
| X | DE-A-2 752 980   (HAUSSELS, BERTHOLD) * Figures 4,6 * | 1,9 | |
| A | | 7,8 | |
| | --- | | |
| X | FR-A-2 288 906   (VIC-TREE (MOULDINGS) LIMITED) * Figures 3,4,5 * | 1,9 | |
| | | | TECHNICAL FIELDS SEARCHED (Int. Cl.4) |
| A | | 7,8 | B 60 B |
| | --- | | |
| A | US-A-4 530 543   (JAMES W. KEANE) * Figure 2 * | 1-4 | |
| | ----- | | |

The present search report has been drawn up for all claims

| Place of search THE HAGUE | Date of completion of the search 13-11-1985 | Examiner VALLE,D. |
|---|---|---|